# EUROPÄISCHE PATENTSCHRIFT

(11) **EP 1 582 030 B1**
(45) Veröffentlichungstag und Bekanntmachung des Hinweises auf die Patenterteilung: **03.05.2006**
(21) Anmeldenummer: 04701004.6
(22) Anmeldetag: 09.01.2004
(51) Int. Cl.: H04L 12/24

(54) **VERFAHREN ZUR BEHANDLUNG VON ALARMEN DURCH EIN MANAGEMENTNETZ MIT MEHREREN EBENEN IN EINEM KOMMUNIKATIONSSYSTEM**
METHOD FOR HANDLING ALERTS BY MEANS OF A MANAGEMENT NETWORK COMPRISING SEVERAL LEVELS IN A COMMUNICATION SYSTEM
PROCEDE DE TRAITEMENT D'ALARMES PAR UN RESEAU DE GESTION A PLUSIEURS NIVEAUX DE SYSTEME DE COMMUNICATION

(30) Priorität: 10.01.2003 DE 10300709; 10.01.2003 EP 03000428
(43) Veröffentlichungstag der Anmeldung: 05.10.2005
(73) Patentinhaber: SIEMENS AKTIENGESELLSCHAFT, 80333 München (DE)
(72) Erfinder: HIRSCH, Lucian, 81373 München (DE)
(86) Internationale Anmeldenummer: PCT/EP2004/000111
(87) Internationale Veröffentlichungsnummer: WO 2004/064322

(56) Entgegenhaltungen:
- EP-A- 0 772 319
- DE-A- 19 801 785

## Beschreibung

Die Erfindung betrifft ein Verfahren zur Behandlung von Alarmen durch ein Managementnetz eines Kommunikationssystems nach dem Oberbegriff des Anspruchs 1.

Die Prinzipien eines Managementnetzes, die auch als TMN-Prinzipien (TMN: Telecommunications Management Network) bezeichnet werden, definieren mehrere Managementschichten für das Management eines Kommunikationssystems - beispielsweise eines Mobil-Kommunikationssystems -, wobei jede Schicht mit Ausnahme der obersten und untersten Schicht eine doppelte Funktion besitzt. Im managenden System ("managing system") übt jede Ebene außer der untersten eine Manager-Funktion für die darunterliegende Ebene aus. Im gemanagten System ("managed system") kommt jeder Ebene außer der obersten eine Agenten-Funktion für die nächsthöhere Schicht zu.

Agenten müssen relevante Ereignisse (sogenannte events, z.B. Alarme) im Netz möglichst schnell erkennen und Ereignismeldungen *(event reports)* generieren und an Manager übertragen, um ein effizientes Netzmanagement zu ermöglichen.

Das Managementnetz eines Kommunikationssystems umfasst folglich zumindest zwei Managementeinrichtungen in verschiedenen Managementebenen, wobei mindestens eine der zumindest zwei Managementeinrichtungen als Element Manager und mindestens eine der zumindest zwei Managementeinrichtungen als dem Element Manager übergeordneter Netzwerk Manager fungieren und die zumindest zwei Managementeinrichtungen einem oder mehreren Alarmen zugeordnete, Operator-definierte Alarmhinweise speichern.

Element Manager fungieren gegenüber einer tiefere Ebene, beispielsweise gegenüber den Elementen eines Basisstationssystems, als Manager und wirken im Hinblick auf die nächsthöhere Managementebene der Netzwerk Manager als Agenten.

Die ITU-T Standards der Serie X.73x definieren für das Management von Telekommunikations-Netzen verschiedene "Systems Management Functions", die von Applikationsprozessen in einer zentralisierten oder dezentralisierten Management-Umgebung benutzt werden können. Die Behandlung von Alarmen *(Alarm surveillance)* als eine der wichtigsten Funktionen zur Netzüberwachung und -kontrolle erfolgt mit Hilfe von Managementeinrichtungen (Management-Systemen), die sich insbesondere auf der *Network Element Management*-Ebene (z.B. OMC, Element Manager) oder *Network Management*-Ebene (z.B. NMC, Network Manager) befinden.

Auf den beiden Management-Ebenen der Element Manager und der Netzwerk Manager haben Operatoren die Möglichkeit, Alarmhinweise (sogenannte *alarm comments*) frei zu definieren und diese bestimmten Alarmen zuzuordnen. Diese frei definierbaren Texte dienen z.B. dazu, den aktuellen Bearbeitungsstatus eines Alarms zu beschreiben und so eine bessere Koordinierung der Aktivitäten zur Alarmbehandlung im gesamten Netz zu erreichen.

Einem Alarm können mehrere Alarmhinweise von unterschiedlichen Operatoren (auch auf unterschiedlichen Management-Ebenen) zugeordnet werden. Um sicherzustellen, dass alle Operatoren den gleichen Informationszustand über einen Alarm haben, muss jeder neue bzw. geänderte Alarmhinweis an alle andere Management-Systeme weitergeleitet werden.

Der Standard 3GPP TS 32.111-2 (Fault Management - Alarm Integration Reference Point) sieht dafür beispielsweise folgende zwei Mechanismen vor:
a) *setComment* (Übermittlung vom NMC an OMC)
   Mit dieser Anforderung informiert ein Network Manager (z.B. NMC) alle angeschlossenen Element Manager (z.B. OMCs), dass ein Alarmhinweis einem oder mehreren Alarmen zugeordnet werden soll.
   Die Anforderung enthält folgende Informationen:
   - Referenzliste der entsprechenden Alarme
   - Operatorkennung
   - Systemkennung (optional)
   - Alarmhinweis.
b) *notifyComments* (Übermittlung vom OMC an NMC)
   Mit dieser Ereignismeldung (*notification)* informiert ein Element Manager (z.B. OMC) alle angeschlossenen Network Manager (z.B. NMCs), dass ein oder mehrere Alarmhinweise einem Alarm zugeordnet werden soll(en). Die Anforderung enthält folgende Informationen:
   - die (eindeutige) Alarmreferenz
   - Alarmhinweis.
   (die anderen Informationen, d.h. Operatorkennung und Systemkennung, sind für die Notifikation nicht vorgesehen).

Diese Mechanismen können einen Abgleich der Alarmhinweise in allen Management-Systemen nicht sicherstellen, wenn die OMC-NMC-Verbindungen zum Zeitpunkt der jeweiligen Erstellung / Veränderung eines Alarmhinweises nicht betriebsbereit sind.

Wenn z.B. ein OMC-Operator den Alarmhinweis während der Unterbrechung der OMC-NMC-Verbindung definiert, ereignet sich folgendes:

Der Hinweis wird nur lokal am OMC einem Alarm zugeordnet (da die Notifikation mangels Verbindung nicht ans NMC gesendet werden kann).

Wenn die OMC-NMC-Verbindung zu einem späteren Zeitpunkt wieder betriebsbereit ist, startet das NMC in der Regel eine Alarmsynchronisierung-Prozedur (*alarm alignment).* Eine derartige Prozedur ist z.B. im Dokument EP 198 01 785 beschrieben. Da operator-definierte Alarmhinweise nicht Bestandteil der momentan standardisierten Alarmsyntax sind, kann eine Synchronisierung der einem Alarm zugeordneten Hinweise nicht gewährleistet werden. Das hat zur Folge, dass die NMC-Operatoren erst bei einer erneuten Änderung des Alarmhinweises über den aktuellen Status informiert werden.

Der Erfindung liegt daher die Aufgabe zugrunde, ein Verfahren der eingangs genannten Art und ein Kommunikationssystem zur Durchführung des Verfahrens aufzuzeigen, durch welche die angegebenen Nachteile vermieden werden können und insbesondere ein verbesserter Informationsabgleich bewirkt werden kann.

Diese Aufgabe wird gemäß der Erfindung hinsichtlich des Verfahrens durch die Merkmale des Patentanspruchs 1 und hinsichtlich des Kommunikationssystems durch die Merkmale des Patentanspruchs 11 gelöst. Weiterbildungen und Ausgestaltungen der Erfindung sind den abhängigen Ansprüchen zu entnehmen.

Erfindungsgemäß wird ein Abgleich der Alarmhinweise zwischen dem mindestens einen Element Manager (z.B.OMC) und dem mindestens einen Netzwerk Manager (z.B. NMC) {auf der nächsthöheren Managementebene des Managementnetzes} zur Synchronisierung der den Operatoren vorliegenden Information bezüglich der Alarmhinweise durchgeführt. Dabei befindet sich jeder Element Manager auf einer Managementebene und jeder Netzwerk Manager (z.B. NMC) auf der nächsthöheren Managementebene des Managementnetzes.

Durch diese Maßnahme wird eine verbesserte und in vielen Fällen auch optimierte Synchronisierungs-Prozedur für Alarmhinweise nach dem Aufbau bzw. der Wiederherstellung einer Verbindung zwischen "Network Manager" und "Element Manager"-Systemen in einem Telekommunikationsnetz zur Verfügung gestellt.

Das erfindungsgemäße Verfahren ist dabei grundsätzlich für alle Telekommunikationsnetze einsetzbar.

In der Regel liegen eine Vielzahl von Element Managern (OMCs) und eine Vielzahl von Netzwerk Managern (NMCs) vor.

In einer bevorzugten ersten Variante der Erfindung erfolgt ein Abgleich der Alarmhinweise bei einer Alarmsynchronisierung zwischen den zumindest zwei Managementeinrichtungen.

Dabei kann der Abgleich der Alarmhinweise bei der Alarmsynchronisierung durch Einbinden der Alarmhinweisinformationen in einen Ereignisbericht (*event report*) erfolgen.

Es kann eine Filterung unerwünschter Alarmhinweise vorgesehen sein. Dazu können eventuell im Element Manager vorhandene Ereignisweiterleitungs-Diskriminatoren (Event Forwarding Discriminator), sogenannte EFDs, eingesetzt werden. Die Aufgabe eines EFD besteht darin, nur diejenigen Ereignisberichte vom Agenten zum Manager zu leiten bzw. routen, welche bestimmten Filterkriterien genügen. Der Manager ist in der Lage solche EFDs im Agent einzurichten oder zu löschen und die Filterkriterien festzulegen. Dadurch kann jeder Manager zu jeder Zeit den Informationsfluß nach seinen individuellen Anforderungen steuern. Das erfingungsgemäße Verfahren erlaubt eine optimale Filterung unerwünschter Alarmhinweise, d.h. der Manager erhält nur Alarmhinweise für die mit der Synchronisierungs-Anforderung ausgewählten Alarme.

Ferner kann der Zeitpunkt der Erstellung bzw. Änderung eines Alarmhinweises im Alarmhinweis erfasst werden. Ein zusätzlicher Parameter, der den Zeitpunkt des jeweiligen Alarmhinweises darstellt *(commentTime),* wird somit unterstützt.

Bei einer zweiten Variante der Erfindung erfolgt ein Abgleich der Alarmhinweise zwischen den zumindest zwei Managementeinrichtungen, indem
- der mindestens eine Netzwerk Manager an den mindestens einen Element Manager eine Anforderung zum Abgleich übermittelt und
- der mindestens eine Element Manager an den mindestens einen Netzwerk Manager Alarmhinweisinformationen sendet.

Dabei kann vorgesehen sein, dass der mindestens eine Netzwerk Manager an den mindestens einen Element Manager eine Anforderung zum Abgleich für die komplette Alarmliste übermittelt.

Möglich ist aber auch alternativ, dass der mindestens eine Netzwerk Manager an den mindestens einen Element Manager eine Anforderung zum Abgleich lediglich für bestimmte Alarme übermittelt.

Außerdem kann der mindestens eine Element Manager an den mindestens einen Netzwerk Manager Alarmhinweisinformationen synchron senden.

Schließlich kann der mindestens eine Element Manager an den mindestens einen Netzwerk Manager Alarmhinweisinformationen asynchron senden.

Erfindungsgemäß gibt es gemäß den obigen Ausführungen zwei Alternativen zum Abgleich der Alarmhinweise zwischen Element Managern (OMCs) und den Netzwerk Managern (NMCs):
a) Einbettung in der allgemeinen Alarmsynchronisierungs-Prozedur, d.h. die Alarmhinweise werden jedesmal bei der üblichen Alarmsynchronisierung mitberücksichtigt.
   Diese Alternative kann eine einheitliche Synchronisierung sowohl der ITU-T standardisierten Alarmparameter als auch der operator-definierten Alarmhinweise nach Wiederherstellung bzw. Aufbau der NMC-OMC-Verbindungen sicherstellen.
b) Eine dedizierte Synchronisierungs-Prozedur, die nach den folgenden Regeln funktioniert:
   - Der Manager (NMC) sendet an den Agenten eine spezifische Synchronisierungs-Anforderung *(alarm comment alignment request),* entweder für die komplette Alarmliste oder nur für bestimmte Alarme.
   - Der Agent (OMC) sendet die Alarmhinweise entweder synchron (d.h. die komplette Information zusammengefasst als *alarm comment alignment response)* oder asynchron (d.h. als Sequenz von einzelnen notifyComments-Notifikationen, wie vorher beschrieben).

Das erfindungsgemäße Kommunikationssystem mit einem Managementnetz umfassend zumindest zwei Managementeinrichtungen in verschiedenen Managementebenen dient zur Durchführung des erfindungsgemäßen Verfahrens. Dazu können im Kommunikationssystem entsprechenden Mittel und Einrichtungen vorgesehen sein.

Nachstehend wird die Erfindung anhand von Ausführungsbeispielen unter Bezugnahme auf die Figuren näher erläutert. Es zeigen
- Fig. 1: das Blockschaltbild eines Managementnetzes für ein Mobil-Kommunikationssystem mit Agent-Manager-Beziehung zwischen Betriebs- und Wartungszentren und mehreren Netzwerkmanagementzentren,
- Fig. 2: ein Schema einer erfindungsgemäß erweiterten Alarmsynchronisierungs-Prozedur.

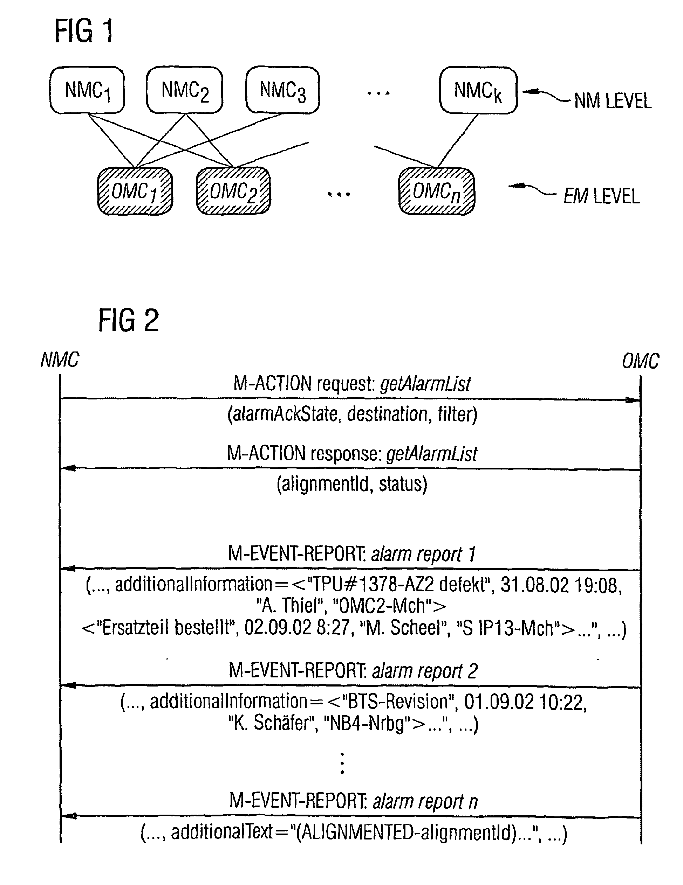

In Figur 1 ist das Blockschaltbild eines Managementnetzes für ein Mobil-Kommunikationssystem mit Agent-Manager-Beziehung zwischen Betriebs- und Wartungszentren OMCs (Operation and Maintenance Centers)und mehreren Netzwerkmanagementzentren NMCs (Network Management Centers) dargestellt. Dabei ist Figur 1 im vorliegenden Fall auf eine Darstellung mit zwei Ebenen NM LEVEL und EM LEVEL beschränkt. Nicht dargestellt ist beispielsweise eine Managementebene des Managementnetzes, welche die Netzeinrichtungsebene ("Network Element Level") mit mehreren Basisstationssystemen enthält.

Die Managementebene EM LEVEL kennzeichnet die Netzeinrichtungsmanagementebene ("Network Element Management Level"), in der Betriebs- und Wartungszentren OMC₁, OMC₂ bis OMCₙ jeweils die herstellerspezifische Managementfunktionalität für beispielsweise nicht in Figur 1 gezeigte einzelne Basisstationssubsysteme bereitstellen. Die Managementebene NM LEVEL kennzeichnet die Netzwerkmanagementebene ("Network Management Level"), in der Netzwerkmanagementzentren NMC₁, NMC₂, NMC₃ bis NMCₖ jeweils eine integrierte, in der Regel vom Hersteller unabhängige Management-Funktionalität realisieren. Dabei können mehrere Netzwerkmanagementzentren NMC einen Zugriff zu derselben Netzeinrichtung der nächstniedrigeren Management-ebene EM LEVEL haben, im vorliegenden Beispiel beispielsweise die Netzmanagementzentren NMC₁ und NMC₂ der nächsthöheren Managementebene NM LEVEL zum Betriebs- und Wartungszentrum OMC₂ der nächstniedrigeren Managementebene EM LEVEL. Zwischen den Netzeinrichtungen unterschiedlicher Managementebenen sind definierte Schnittstellen zur Informationsübertragung vorgesehen.

Figur 2 zeigt ein Schema einer erfindungsgemäß erweiterten Alarmsynchronisierungs-Prozedur.

Die Beschreibung des Verfahrensbeispiels erfolgt anhand einer Q3 (CMIP-basierten)-Schnittstelle. Die Erfindung ist aber auch auf andere Schnittstellen wie beispielsweise CORBA-Schnittstellen anwendbar.

Die Übertragung von Ereignismeldungen von Agenten (z.B. OMC) an Manager (z.B. NMC) erfolgt gemäß Standard ITU-T X.710 ("Common Management Information Service Definition for CCITT Applications") mit Hilfe des sogenannten Notifikations-Dienstes M-EVENT-REPORT.

Die im Standard ITU-T X.721 ("Structure of Management Information: Definition of Management Information") definierte Struktur von Alarmnachrichten (*AlarmInfo*) enthält unter anderen das optionalen Feld *additionalInformation*, der gemäß ITU-T X.733 ("Systems Management: Alarm Reporting Function") die Einschließung zusätzlicher Informationen (sogenannte *Management Extension)* in einem Ereignisbericht (*event report*) ermöglicht.

In vorliegenden Fall entspricht die *ManagementExtension* aller einem Alarm zugeordneten Hinweise (*alarmComments*), wobei ein jeweiliger Alarmhinweis wie folgt definiert wird:
- *commentText:* enthält den Operatorhinweis
- *commentTime:* definiert den Zeitpunkt, als der Hinweis erstellt/geändert wurde
- *commentUserId*: identifiziert die Kennung des Operators (Autor des Alarmhinweises)
- *commentSystemId:* identifiziert die Kennung des Management-Systems (optional).

Die im Standard 3GPP TS 32.111-4 standardisierte Alarmsynchronisierungs-Prozedur wird wie im folgenden Beispiel erweitert:

Figur 2 verdeutlicht den Nachrichtenfluß zwischen einem Agent OMC und dem Manager NMC zum Abgleich der Alarmhinweise.

Der Nachrichtenfluß erfolgt vorzugsweise unter Verwendung standardisierter M-EVENT-REPORT Nachrichten, die als Folge einer zu Anfang initiierten M-ACTION-request Anforderung "getAlarmList" [Aktionsinformationen "alarmAckState", "destination" und "filter"] gesendet werden.

Der Agent OMC erzeugt einen temporären Ereignisweiterleitungs-Diskriminator EFD (Event Forwarding Discriminator) mit der M-ACTION-response Antwort "getAlarmList" [Aktionsinformationen "alignmentId" und "status"].

Der Agent OMC überträgt die Alarme, wobei die ITU-T X.733 den Inhalt einer standardisierten, gemäß den M-EVENT-REPORT Services durchgeführten Alarmübertragung *(alarm report 1, alarm report* 2 ... *alarm report n)* definiert:
- *alarm report 1*:: Alarm mit zwei Alarmhinweisen:
Der erste Alarmhinweis
   - enthält den Operatorhinweis "TPU #1378-AZ2 defekt",
   - definiert den Zeitpunkt der Erstellung/ Änderung des Alarmhinweises "31.08.02 19:08",
   - identifiziert die Kennung des Operators als Autor des Alarmhinweises "A. Thiel" und
   - identifiziert die Kennung des Management-Systems "OMC2-Mch".
Der zweite Alarmhinweis
   - enthält den Operatorhinweis "Ersatzteil bestellt",
   - definiert den Zeitpunkt der Erstellung/ Änderung des Alarmhinweises "02.09.02 8:27",
   - identifiziert die Kennung des Operators als Autor des Alarmhinweises "M. Scheel" und
   - identifiziert die Kennung des Management-Systems "S IP13-Mch".
- *alarm report* 2:: Alarm mit einem Alarmhinweis:
Der Alarmhinweis
   - enthält den Operatorhinweis "BTS-Revision",
   - definiert den Zeitpunkt der Erstellung/ Änderung des Alarmhinweises "01.09.02 10:22",
   - identifiziert die Kennung des Operators als Autor des Alarmhinweises "K. Schäfer" und
   - identifiziert die Kennung des Management-Systems "NB4-Nrbg".
■
■
■
- *alarm report* n:: Letzter Alarm (ohne Alarmhinweis), der die Filterkriterien erfüllt. Der Agent OMC löscht den temporären Ereignisweiterleitungs-Diskriminator EFD.

Die Struktur *alarmcomments* wird gemäß GDMO-Template als PARAMETER des *additionalInformation*-Attributes für jeden Alarm definiert. Der Standard ITU-T X.722 (Guidelines for the Definition of Managed Objects, GDMO) spezifiziert dafür bestimmte Formate *(templates),* um eine standardisierte Übertragung zusätzlicher Managementinformationen (zum Beispiel in Notifikations-Attributen) zu ermöglichen. Die ASN.1-Syntax (ASN = Abstract Syntax Notation) der einem Alarmhinweis zugeordneten Daten muss wie folgt definiert werden:

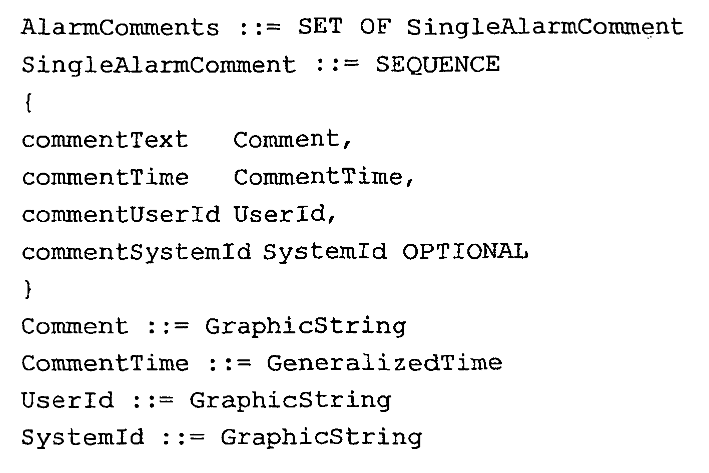

Die Parameter *operatorKennung* und (optional) *systemKennung*, die in der standardisierten *notifyComments*-Notifikation nicht definiert sind, werden durch die oben-genannten Komponenten *commentUserId* und *commentSystemld* des standardiserten Attributes *additionalInformation* (als Bestandteil jedes Alarms) bei der Alarmsynchronisierung implizit mitberücksichtigt.

## Patentansprüche

1. Verfahren zur Behandlung von Alarmen durch ein Managementnetz eines Kommunikationssystems,
wobei das Managementnetz zumindest zwei Managementeinrichtungen (NMC, OMC) in verschiedenen Managementebenen umfasst,
wobei mindestens eine der zumindest zwei Managementeinrichtungen als Element Manager (OMC) und mindestens eine der zumindest zwei Managementeinrichtungen als dem Element Manager (OMC) übergeordneter Netzwerk Manager (NMC) fungieren und die zumindest zwei Managementeinrichtungen (NMC, OMC) einem oder mehreren Alarmen zugeordnete, Operator-definierte Alarmhinweise speichern,
**dadurch gekennzeichnet,**
**dass** ein Abgleich der Alarmhinweise zwischen dem mindestens einen Element Manager (OMC) und dem mindestens einen Netzwerk Manager (NMC) zur Synchronisierung der den Operatoren vorliegenden Information bezüglich der Alarmhinweise durchgeführt wird.

2. Verfahren nach Anspruch 1, **dadurch gekennzeichnet, dass** der Abgleich der Alarmhinweise gleichzeitig zu einer Alarmsynchronisierung zwischen den zumindest zwei Managementeinrichtungen (NMC, OMC) erfolgt.

3. Verfahren nach Anspruch 2, **dadurch gekennzeichnet, dass** der Abgleich der Alarmhinweise bei der Alarmsynchronisierung durch Einbinden der Alarmhinweisinformationen in einen Ereignisbericht erfolgt.

4. Verfahren nach Anspruch 2 oder 3, **dadurch gekennzeichnet, dass** eine Filterung unerwünschter Alarmhinweise erfolgt.

5. Verfahren nach einem der Ansprüche 2 bis 4, **dadurch gekennzeichnet, dass** der Zeitpunkt der Erstellung bzw. Änderung eines Alarmhinweises im Alarmhinweis erfasst wird.

6. Verfahren nach Anspruch 1, **dadurch gekennzeichnet, dass** ein Abgleich der Alarmhinweise zwischen den zumindest zwei Managementeinrichtungen (NMC, OMC) erfolgt, indem
- der mindestens eine Netzwerk Manager (NMC) an den mindestens einen Element Manager (OMC) eine Anforderung zum Abgleich übermittelt und
- der mindestens eine Element Manager (OMC) an den mindestens einen Netzwerk Manager (NMC) Alarmhinweisinformationen sendet.

7. Verfahren nach Anspruch 6, **dadurch gekennzeichnet, dass** der mindestens eine Netzwerk Manager (NMC) an den mindestens einen Element Manager (OMC) eine Anforderung zum Abgleich für die komplette Alarmliste übermittelt.

8. Verfahren nach Anspruch 6, **dadurch gekennzeichnet, dass** der mindestens eine Netzwerk Manager (NMC) an den mindestens einen Element Manager (OMC) eine Anforderung zum Abgleich für bestimmte Alarme übermittelt.

9. Verfahren nach einem der Ansprüche 6 bis 8, **dadurch gekennzeichnet, dass** der mindestens eine Element Manager (OMC) an den mindestens einen Netzwerk Manager (NMC) Alarmhinweisinformationen synchron sendet.

10. Verfahren nach einem der Ansprüche 6 bis 8, **dadurch gekennzeichnet, dass** der mindestens eine Element Manager (OMC) an den mindestens einen Netzwerk Manager (NMC) Alarmhinweisinformationen asynchron sendet.

11. Kommunikationssystem mit einem Managementnetz umfassend zumindest zwei Managementeinrichtungen (NMC, OMC) in verschiedenen Managementebenen zur Durchführung des Verfahrens nach einem der vorangehenden Ansprüche 1 bis 10.

## Claims

1. Method for handling alarms by means of a management network of a communication system,
with the management network comprising at least two management elements (NMC, OMC) on different management levels,
with at least one of the at least two management elements operating as an element manager (OMC) and with at least one of the at least two management elements operating as a network manager (NMC), which is higher ranking than the element manager (OMC), and the at least two management elements (NMC, OMC) storing operator-defined alarm comments assigned to one or a plurality of alarms,
**characterised in that**
the alarm comments are aligned between the at least one element manager (OMC) and the at least one network manager (NMC) to synchronize the information available to the operators regarding the alarm comments.

2. Method according to claim 1, **characterised in that** the alarm comments are aligned at the same time as alarm synchronization between the at least two management elements (NMC, OMC) .

3. Method according to claim 2, **characterised in that** the alarm comments are aligned during alarm synchronization by incorporating the alarm comment information in an event report.

4. Method according to claim 2 or 3, **characterised in that** unwanted alarm comments are filtered.

5. Method according to one of claims 2 to 4, **characterised in that** the time of creation or modification of an alarm comment is recorded in the alarm comment.

6. Method according to claim 1, **characterised in that** the alarm comments are aligned between the at least two management elements (NMC, OMC) **in that**
- the at least one network manager (NMC) transmits an alignment request to the at least one element manager (OMC) and
- the at least one element manager (OMC) sends alarm comment information to the at least one network manager (NMC).

7. Method according to claim 6, **characterised in that** the at least one network manager (NMC) transmits an alignment request for the entire alarm list to the at least one element manager (OMC).

8. Method according to claim 6, **characterised in that** the at least one network manager (NMC) transmits an alignment request for specific alarms to the at least one element manager (OMC).

9. Method according to one of claims 6 to 8, **characterised in that** the at least one element manager (OMC) sends alarm comment information synchronously to the at least one network manager (NMC).

10. Method according to one of claims 6 to 8, **characterised in that** the at least one element manager (OMC) sends alarm comment information asynchronously to the at least one network manager (NMC).

11. Communication system with a management network comprising at least two management elements (NMC, OMC) on different management levels to implement the method according to one of the preceding claims 1 to 10.

## Revendications

1. Procédé pour le traitement d'alarmes par un réseau de gestion d'un système de communication, le réseau de gestion comprenant au moins deux dispositifs de gestion (NMC, OMC) dans différents niveaux de gestion , au moins l'un des au moins deux dispositifs de gestion faisant office de Element Manager (OMC) et au moins l'un des au moins deux dispositifs de gestion faisant office de Network Manager (NMC) supérieur au Element Manager (OMC) et les au moins deux dispositifs de gestion (NMC, OMC) mémorisant des annotations d'alarme attribuées à une ou plusieurs alarmes et définies par l'opérateur,
**caractérisé en ce que**
un alignement des annotations d'alarme entre le au moins un Element Manager (OMC) et le au moins un Network Manager (NMC) est effectué pour la synchronisation de l'information disponible pour les opérateurs en ce qui concerne les annotations d'alarme.

2. Procédé selon la revendication 1, **caractérisé en ce que** l'alignement des annotations d'alarme intervient en même temps qu'une synchronisation d'alarme entre les au moins deux dispositifs de gestion (NMC, OMC).

3. Procédé selon la revendication 2, **caractérisé en ce que** l'alignement des annotations d'alarme intervient lors de la synchronisation d'alarme par l'intégration des annotations d'alarme dans un rapport d'événement.

4. Procédé selon la revendication 2 ou 3, **caractérisé en ce qu'**un filtrage d'annotations d'alarme inopportunes est effectué.

5. Procédé selon l'une quelconque des revendications 2 à 4, **caractérisé en ce que** le moment de l'élaboration resp. de la modification d'une annotation d'alarme est enregistré dans l'annotation d'alarme.

6. Procédé selon la revendication 1, **caractérisé en ce qu'**un alignement des annotations d'alarme s'effectue entre les au moins deux dispositifs de gestion (NMC, OMC) du fait que
- le au moins un Network Manager (NMC) transmet une demande d'alignement à l'au moins un Element Manager (OMC) et
- le au moins un Element Manager (OMC) envoie des informations d'annotation d'alarme à l'au moins un Network Manager (NMC).

7. Procédé selon la revendication 6, **caractérisé en ce que** le au moins un Network Manager (NMC) transmet à l'au moins un Element Manager (OMC) une demande d'alignement pour la liste d'alarme complète.

8. Procédé selon la revendication 6, **caractérisé en ce que** le au moins un Network Manager (NMC) transmet à l'au moins un Element Manager (OMC) une demande d'alignement pour certaines alarmes.

9. Procédé selon l'une quelconque des revendications 6 à 8, **caractérisé en ce que** le au moins un Element Manager (OMC) envoie de manière synchrone des informations d'annotation d'alarme à l'au moins un Network Manager (NMC).

10. Procédé selon l'une quelconque des revendications 6 à 8, **caractérisé en ce que** le au moins un Element Manager (OMC) envoie de manière synchrone des informations d'annotation d'alarme à l'au moins un Network Manager (NMC).

11. Système de communication avec un réseau de gestion comprenant au moins deux dispositifs de gestion (NMC, OMC) dans différents niveaux de gestion pour mettre en oeuvre le procédé selon l'une quelconque des revendications précédentes 1 à 10.
